(19) Europäisches Patentamt
European Patent Office
Office européen des brevets

(11) EP 4 098 665 B1

(12) **EUROPEAN PATENT SPECIFICATION**

(45) Date of publication and mention of the grant of the patent:
**08.07.2026 Bulletin 2026/28**

(21) Application number: **21747623.3**

(22) Date of filing: **22.01.2021**

(51) International Patent Classification (IPC):
***C08L 53/02*** *(2006.01)* ***C08F 8/00*** *(2006.01)*
***C08F 297/04*** *(2006.01)* ***C08J 3/24*** *(2006.01)*

(52) Cooperative Patent Classification (CPC):
(C-Sets available)
**C08F 297/04; C08J 3/24; C08K 5/14;** C08J 2353/02
(Cont.)

(86) International application number:
**PCT/JP2021/002253**

(87) International publication number:
**WO 2021/153455 (05.08.2021 Gazette 2021/31)**

(54) **THERMOSETTING COMPOSITION CONTAINING STYRENE-BUTADIENE-STYRENE BLOCK POLYMER, AND METHOD FOR CURING SAME**

WÄRMEHÄRTENDE ZUSAMMENSETZUNG MIT STYROL-BUTADIEN-STYROL-BLOCKPOLYMER UND VERFAHREN ZU DEREN HÄRTUNG

COMPOSITION THERMODURCISSABLE CONTENANT UN POLYMÈRE À BLOCS STYRÈNE-BUTADIÈNE-STYRÈNE, ET PROCÉDÉ DE DURCISSEMENT DE CETTE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2020 JP 2020012576**

(43) Date of publication of application:
**07.12.2022 Bulletin 2022/49**

(73) Proprietor: **Nippon Soda Co., Ltd.**
**Tokyo 100-7010 (JP)**

(72) Inventors:
- **TANDO, Izumi**
  **Ichihara-shi, Chiba 290-8530 (JP)**
- **OSUMI, Shota**
  **Ichihara-shi, Chiba 290-8530 (JP)**

(74) Representative: **Wibbelmann, Jobst**
**Wuesthoff & Wuesthoff**
**Patentanwälte und Rechtsanwalt PartG mbB**
**Schweigerstrasse 2**
**81541 München (DE)**

(56) References cited:
**WO-A1-2018/164833**
**JP-A- 2008 094 889**
**JP-A- 2015 062 997**
**JP-A- H02 120 351**
**JP-A- H02 283 766**
**JP-A- H09 194 636**
**US-A1- 2015 011 711**
**US-B1- 6 586 533**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/14, C08L 53/02**

## Description

### Technical Field

The present invention relates to a method for producing a cured product by curing a thermosetting composition under a specific condition.

### Background Art

A composition containing a styrene-butadiene-styrene block copolymer may be thermally cured to yield cured products having excellent water resistance, heat resistance, insulation, adhesion to a substrate, and the like. These cured products are applied in general industrial products.

For example, Patent Document 1 proposes a thermosetting resin composition comprising: (A) a modified polyphenylene ether compound having a weight-average molecular weight of 1000 or more and an intrinsic viscosity of 0.03 to 0.12 dl/g measured in chloroform at 25°C, and terminal-modified by a substituent having a carbon-carbon unsaturated double bound at the molecular terminal; (B) a cross-linkable styrene-butadiene copolymer having a number-average molecular weight of less than 10,000, a styrene content in the molecule of 50 mass% or less, and a butadiene content of 50 mass% or more; (C) a styrene-based thermoplastic elastomer having a weight-average molecular weight of 10,000 or more; (D) a curing accelerator; (E) an inorganic filler; and (F) a flame retardant, wherein a blended ratio of the component (A) : [the component (B) + the component (C)] is 90:10 to 10:90. As the styrene-based thermoplastic elastomer of the component (C) in the thermosetting resin composition, a styrene-butadiene-styrene copolymer may be selected. A laminate produced by using the thermosetting resin composition may be presumably cured under conditions of a temperature of 170 to 220°C, a pressure of 1.5 to 5.0 MPa, and a time of 60 to 150 minutes. Patent Document 2 discloses a process of making a laminate that contains a flame retardant composition consisting of modified PPE (polyphenylene ether) and a specific phosphorus-containing aromatic polyester, the process comprising impregnating the composition into a filler material, to form a prepreg, followed by processing the prepreg at elevated temperature to promote partial cure to a B-stage and then laminating two or more of said prepregs at elevated pressure and temperature to form a laminate.
Patent Document 3 discloses how to obtain a flame-retardand composition having lowered permittivity and water absorptivity and improved heat resistance, flame retardancy and chemical resistance by mixing powdery polytetrafluoroethylene with a specified thermoplastic resin, a reactive flame retardant and a radical polymerization initiator.
Patent Document 4 discloses how to prepare a low dielectric resin composition having, e.g. flame retardancy, by compounding a specific thermoplastic resin, porous or hollow particles of a polymer, a reactive flame retardant, and a radical generator.

### Prior Art Document

### Patent Document

Patent Document 1: Japanese unexamined Patent Application Publication No. 2018-95815
Patent Document 2: WO 2018/164833 A1
Patent Document 3: JP H02 120351 A
Patent Document 4: JP H02 283766 A

### Summary of the Invention

### Object to be Solved by the Invention

When a thermosetting composition containing a styrene-butadiene-styrene block copolymer is cured under a conventionally known curing condition, the curing reaction does not proceed sufficiently in some cases. Thus, a curing method that may efficiently cure the thermosetting composition within a certain time is required.

### Means to Solve the Object

The present inventors have made intensive investigation to solve the above object, and as a result, have found a method for producing a cured product, comprising: (I) heating a thermosetting composition containing a styrene-butadiene-styrene block copolymer (SBS) (A) and a thermal radical generator (B) within a temperature range of

120°C to 175°C until 30% or more of double bonds derived from 1,2-bond structure in the butadiene block react; and (II) then heating the thermosetting composition within a temperature range of 181°C to 300°C until 50% or more of the double bonds derived from 1,2-bond structure in the butadiene block react, and have completed the present invention, wherein the reaction rate of double bonds is calculated by using an infrared spectrometer.

That is, the present invention relates to the following inventions.

(1) A method for producing a cured product, comprising:

(I) heating a thermosetting composition containing a styrene-butadiene-styrene block copolymer (SBS) (A) and a thermal radical generator (B) within a temperature range of 120°C to 175°C until 30% or more of double bonds derived from 1,2-bond structure in a butadiene block react; and
(II) then heating the thermosetting composition within a temperature range of 181°C to 300°C until 50% or more of the double bonds derived from 1,2-bond structure in a butadiene block react,_wherein the reaction rate of double bonds is calculated by using an infrared spectrometer.

(2) The method for producing a cured product according to (1), wherein a molar ratio of 1,2-bond structure and 1,4-bond structure in the butadiene block in the styrene-butadiene-styrene block copolymer (SBS) (A) is 80:20 to 100:0, wherein the molar ratio of 1,2-bond structure and 1,4-bond structure is calculated by using an $^{1}$H-NMR.
(3) The method for producing a cured product according to (1) or (2), wherein the thermosetting composition comprises 0.1 to 10 parts by weight of the thermal radical generator (B) with respect to 100 parts by weight of the styrene-butadiene-styrene block copolymer (SBS) (A).
(4) The method for producing a cured product according to any one of (1) to (3), wherein a weight ratio of a styrene block and the butadiene block in the styrene-butadiene-styrene block copolymer (SBS) (A) is 10:90 to 90:10.
(5) The method for producing a cured product according to any one of (1) to (4), wherein a number-average molecular weight (Mn) of the styrene-butadiene-styrene block copolymer (SBS) (A) is 2,000 to 100,000, wherein the number-average molecular weight (Mn) of the styrene-butadiene-styrene block copolymer (SBS) is measured by GPC in THF with polystyrene as a standard material.
(6) The method for producing a cured product according to any one of (1) to (5), wherein a molecular weight distribution (Mw/Mn) of the styrene-butadiene-styrene block copolymer (SBS) (A) is 1.00 to 3.00.

**Effect of the Invention**

The method for producing a cured product of the present invention can efficiently cure the styrene-butadiene-styrene block copolymer.

**Mode of Carrying Out the Invention**

(Thermosetting Composition)

A thermosetting composition contains a styrene-butadiene-styrene block copolymer (SBS) (component A) and a thermal radical generator (component B). Contents of each component are not particularly limited, and a content of the thermal radical generator may be selected from 0.1 to 10 parts by weight, 0.5 to 10 parts by weight, 0.5 to 5 parts by weight, 1 to 5 parts by weight, and the like with respect to 100 parts by weight of the styrene-butadiene-styrene block copolymer.

(Styrene-Butadiene-Styrene Block Copolymer)

The component (A) used in the present invention is the styrene-butadiene-styrene block copolymer (SBS). A styrene block is a styrene-polymerized block and a butadiene block is a 1,3-butadiene-polymerized block. The butadiene block is constituted with a 1,2-bond structure represented by the formula (1) and a 1,4-bond structure represented by the formula (2).

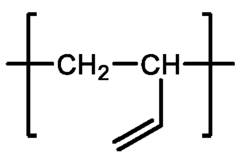
(1)

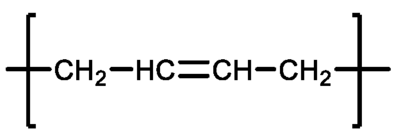
(2)

A molar ratio of the 1,2-bond structure represented by the formula (1) and the 1,4-bond structure represented by the formula (2) that are contained in the styrene-butadiene-styrene block copolymer used in the present invention is not particularly limited, and 80:20 to 100:0 may be exemplified.

A weight ratio of the styrene block and the butadiene block in the styrene-butadiene-styrene block copolymer is not particularly limited, and 10:90 to 90:10, 10:90 to 80:20, 10:90 to 70:30, 10:90 to 60:40, 10:90 to 50:50, 10:90 to 40:60, 15:85 to 40:60, 20:80 to 40:60, 25:75 to 40:60, and 25:75 to 35:65 may be exemplified.

A number-average molecular weight (Mn) of the styrene-butadiene-styrene block copolymer is not particularly limited, and 2,000 to 100,000, 2,000 to 80,000, 2,000 to 60,000, and the like may be exemplified. A molecular weight distribution (Mw/Mn) of the styrene-butadiene-styrene block copolymer is not particularly limited, and 1.00 to 3.00, 1.00 to 2.00, and the like may be exemplified. The number-average molecular weight (Mn) and the molecular weight distribution (Mw/Mn) are measured by gel permeation chromatography (GPC) with polystyrene as a standard material. The measurement conditions are: a moving phase of THF (tetrahydrofuran); a flow rate of the moving phase of 1 mL/minute; a column temperature of 40°C; a sample injection amount of 40 μL; and a sample concentration of 2 weight%.

A method for producing the styrene-butadiene-styrene block copolymer used in the present invention is not particularly limited. For example, the styrene-butadiene-styrene block copolymer may be produced with methods described in Japanese unexamined Patent Application Publication No. H6-192502, Japanese unexamined Patent Application Publication (translation of PCT application) No. 2000-514122, and Japanese unexamined Patent Application Publication No. 2007-302901, and methods similar thereto.

(Thermal Radical Generator)

The thermal radical generator is not particularly limited. Commercially available thermal radical generators may be used. As the thermal radical initiator, an organic peroxide such as: a hydroperoxide such as diisopropylbenzene hydroperoxide (PERCUMYL P), cumene hydroperoxide (PERCUMYL H), and t-butyl hydroperoxide (PERBUTYL H); a dialkyl peroxide such as α,α-bis(t-butylperoxy-m-isopropyl)benzene (PERBUTYL P), dicumyl peroxide (PERCUMYL D), 2,5-dimethyl-2,5-bis(t-butylperoxy)hexane (PERHEXA 25B), t-butyl cumyl peroxide (PERBUTYL C), di-t-butyl peroxide (PERBUTYL D), 2,5-dimethyl-2,5-bis(t-butylperoxy)hexyne-3 (PERHEXYNE 25B), and t-butyl peroxy-2-ethylhexanoate (PERBUTYL O); a ketone peroxide; a peroxy ketal such as n-butyl 4,4-di-(t-butylperoxy)valerate (PERHEXA V); a diacyl peroxide; a peroxy dicarbonate; and a peroxyester; and an azo compound such as 2,2'-azobisisobutyronitrole, 1,1'-(cyclohexane-1,1-carbonitrile), 2,2'-azobis(2-cyclopropylpropionitrile), and 2,2'-azobis(2,4-dimethylvaleronitrile) may be specifically exemplified. These compounds may be used alone or used by combination of two or more thereof.

(Other Components)

The thermosetting composition may contain other components in addition to the styrene-butadiene-styrene block copolymer (A) and the thermal radical generator (B) as long as the purpose of the present invention is not impaired. As the other components, a filler, an organic resin (such as a silicone resin, an epoxy resin, and a fluororesin), a solvent, a stabilizer (such as an antioxidant, an ultraviolet absorbent, and a light stabilizer), a flame retardant (such as a phosphorus-based flame retardant, a halogen-based flame retardant, and an inorganic flame retardant), a flame retardant auxiliary, a reinforcing material, a lubricant, a wax, a plasticizer, a mold-releasing agent, an anti-impact modifier, a hue modifier, a flowable modifier, a coloring agent (such as a dye and a pigment), a dispersant, an antifoaming agent, a defoamer, an antibacterial agent, a preservative, a viscosity adjuster, a thickener, and the like may be exemplified. These components may be used alone or used by combination of two or more thereof.

A method for producing the thermosetting composition of the present invention is not particularly limited. For example, a method in which the thermal radical generator (B) is added into the styrene-butadiene-styrene block copolymer (A) and then the mixture is kneaded with a kneader may be exemplified.

(Method for Producing Cured Product)

A method for producing a cured product of the present invention comprises: a step (I) of heating the thermosetting composition within a temperature range of 120°C to 175°C until 30% or more of double bonds derived from 1,2-bond structure in the butadiene block react; and then a step (II) of heating the thermosetting composition within a temperature range of 181°C to 300°C until 50% or more of the double bonds derived from 1,2-bond structure in the butadiene block react, wherein the reaction rate of double bonds is calculated by using an infrared spectrometer.

The temperature ranges in the steps (I) and (II) may be appropriately set as long as they each are within the above temperature range. For example, a lower limit of the temperature range in the step (I) may be set to be 125°C, 130°C, 135°C, 140°C, 145°C, or 150°C. A higher limit of the temperature range in the step (I) may be set to be 170°C.

A lower limit of the temperature range in the step (II) may be set to be 185°C, 190°C, 195°C, or 200°C. A higher

limit of the temperature range in the step (II) may be set to be 295°C, 290°C, 285°C, 280°C, 275°C, 270°C, 265°C, 260°C, 255°C, 250°C, 245°C, or 240°C.

In the step (I), 50% or more of the double bonds may react, and in this case, further double bonds react in the step (II). In the step (I), the step (I) is typically finished at a degree of 30% to 70% to be shifted to the step (II). In this time, the heating is typically performed continuously to rise a temperature.

In both the step (I) and the step (II), the heating allows the reaction at a constant temperature within the temperature range, or allows the reaction with heated to rise a temperature.

The cure under the conditions in the step (I) and the step (II) may efficiently proceed the curing reaction.

In the step (I) and the step (II), "a rate (%) at which the double bonds derived from 1,2-bond structure in the butadiene block react" (hereinafter, which may be described as "reaction rate") may be calculated with the following method.

The reaction rate may be calculated by using an infrared spectrometer. At a room temperature, an infrared absorption spectrum of the double bond derived from 1,2-bond structure in the butadiene block is detected near 850 $cm^{-1}$ to 950 $cm^{-1}$ (spectrum A). An infrared absorption spectrum of the thermosetting composition before the curing reaction is measured at a room temperature to calculate an integrated value $A_0$ of the spectrum A. Then, an infrared absorption spectrum of a sample after the curing reaction is measured under the same condition to calculate an integrated value At of the spectrum A. The reaction rate (%) is a value calculated with the following formula.

$$\text{Reaction Rate (\%)} = ((\text{Spectrum } A_0 - \text{Spectrum } A_t) / \text{Spectrum } A_0) \times 100$$

## Examples

The present invention will be described in more detail with Example below, but the present invention is not limited to the scope of Example.

(Production of Styrene-Butadiene-Styrene Block Copolymer)

Production Example 1

Into a 5000-mL flask, 1893.91 g of cyclohexane and 306.92 g of tetrahydrofuran were added. The mixture was heated to 30°C, and then 25.32 g of n-butyllithium (a hexane solution at a concentration of 15.1 weight%) was added. After the mixture was stirred for 10 minutes, 150.32 g of styrene was added dropwise to be stirred for 10 minutes. A disappearance of the monomer was checked by gas chromatography (hereinafter, abbreviated as GC).

Then, a mixed liquid of 301.30 g of 1,3-butadiene and 197.50 g of hexane was added dropwise to be stirred for 15 minutes. A disappearance of the monomer was checked by GC, and then 150.30 g of styrene was added dropwise. After the mixture was stirred for 30 minutes, 10.40 g of methanol was added.

The obtained copolymer was analyzed by gel permeation chromatography (with a moving phase of tetrahydrofuran and a polystyrene standard) to find that the copolymer had a number-average molecular weight (Mn) of 19600, a molecular weight distribution (Mw/Mn) of 1.16, and a composition ratio of PS/PB/PS = 25/50/25 weight%.

The reaction liquid was washed twice with water, and then a solvent was evaporated. A vacuum dry was performed to obtain a styrene-butadiene-styrene block copolymer A (white powder). A molar ratio of the 1,2-bond structure and the 1,4-bond structure in the butadiene block calculated by $^1$H-NMR was 94:6.

Production Example 2

Into a 500-mL flask, 155.90 g of cyclohexane and 20.10 g of tetrahydrofuran were added. The mixture was heated to 30°C, and then 1.95 g of n-butyllithium (a hexane solution at a concentration of 15.1 weight%) was added. After the mixture was stirred for 10 minutes, 7.64 g of styrene was added dropwise to be stirred for 30 minutes. A disappearance of the monomer was checked by gas chromatography (hereinafter, abbreviated as GC).

Then, a mixed liquid of 35.07 g of 1,3-butadiene and 35.07 g of hexane was added dropwise to be stirred for 15 minutes. A disappearance of the monomer was checked by GC, and then 7.78 g of styrene was added dropwise. After the mixture was stirred for 30 minutes, 0.40 g of methanol was added to terminate the reaction.

The obtained copolymer was analyzed by gel permeation chromatography (with a moving phase of tetrahydrofuran and a polystyrene standard) to find that the copolymer had a number-average molecular weight (Mn) of 17400, a molecular weight distribution (Mw/Mn) of 1.07, and a composition ratio of PS/PB/PS = 15/70/15 weight%.

The reaction liquid was washed twice with water, and then a solvent was evaporated. The product was reprecipitated in methanol and filtered, and a vacuum dry was performed to obtain a styrene-butadiene-styrene block copolymer B (colorless, clear viscous liquid). A molar ratio of the 1,2-bond structure and the 1,4-bond structure in the

butadiene block calculated by $^1$H-NMR was 89:11.

(Production of Thermosetting Composition)

Example A

Into a kneader, 100 parts by weight of the styrene-butadiene-styrene block copolymer A obtained in Production Example 1 and 2 parts by weight of dicumyl peroxide (PERCUMYL D, manufactured by NOF CORPORATION) were added. The mixture was mixed at 90°C for 10 minutes to produce a thermosetting composition A.

Example B

Into a rotation-revolution mixer, 100 parts by weight of the styrene-butadiene-styrene block copolymer B obtained in Production Example 2 and 2 parts by weight of dicumyl peroxide (PERCUMYL D, manufactured by NOF CORPORATION) were added. The mixture was mixed at 60°C for 20 minutes to produce a thermosetting composition B.

(Production of Cured Product)

Comparative Examples 1 to 5

The thermosetting composition B obtained in Example B was heated at a constant temperature for 2 hours to obtain a cured product. Regarding the obtained cured product, a reaction rate (%) and a glass transition temperature (°C) were measured. The reaction rate (%) was calculated with the method described above. The glass transition temperature (°C) was measured with reference to JIS K 6240. Table 1 shows the results.

Examples 1 to 6

The thermosetting composition B obtained in Example B was heated under conditions of the step I and the step II described in Table 2 to obtain a cured product. Regarding each of a cured product obtained after the step I and a cured product obtained after the step II, reaction rates (%) were calculated. A glass transition temperature (°C) of the cured product obtained after the step II was measured. The reaction rate (%) was calculated with the method described above. The glass transition temperature was measured with reference to JIS K 6240. Table 2 shows the results.

[Table 1]

| | Comparative Example 1 | Comparative Example 2 | Comparative Example 3 | Comparative Example 4 | Comparative Example 5 |
|---|---|---|---|---|---|
| Curing temperature (°C) | 150 | 170 | 200 | 220 | 240 |
| Curing time (hour) | 2 | 2 | 2 | 2 | 2 |
| Reaction rate (%) | 49.6 | 51.2 | 53.4 | 56.6 | 62.2 |
| Glass transition temperature (°C) | 44.6 | 36.0 | 28.4 | 29.7 | 42.6 |

[Table 2]

| | | Example 1 | Example 2 | Example 3 | Example 4 | Example 5 | Example 6 |
|---|---|---|---|---|---|---|---|
| Step (I) | Curing temperature (°C) | 150 | 150 | 150 | 170 | 150 | 150 |
| | Curing time (hour) | 1 | 1 | 1 | 1 | 0.5 | 1.5 |
| | Reaction rate after step (I) (%) | 45.6 | 49.0 | 46.4 | 52.8 | 33.7 | 49.4 |

(continued)

| | | Example 1 | Example 2 | Example 3 | Example 4 | Example 5 | Example 6 |
|---|---|---|---|---|---|---|---|
| Step (II) | Curing temperature (°C) | 200 | 220 | 240 | 220 | 200 | 200 |
| | Curing time (hour) | 1 | 1 | 1 | 1 | 1.5 | 0.5 |
| | Reaction rate after step (II) (%) | 62.5 | 68.9 | 70.6 | 60.3 | 59.9 | 63.0 |
| | Glass transition temperature (°C) | 53.6 | 54.3 | 57.3 | 35.5 | 42.9 | 56.2 |

Example 1 showed results of curing in a total of 2 hours, which was heating at 150°C for 1 hour and then heating at 200°C for 1 hour. The reaction rate was 62.5%, and the glass transition temperature was 52.6°C. These values were higher than Comparative Example 1, which is of curing at 150°C for 2 hours, and Comparative Example 3, which is of curing at 200°C for 2 hours. From the above, regarding the curing condition of the styrene-butadiene-styrene block copolymer, it is found that the curing proceeds more by stepwise heating than by heating at a constant temperature. The same applies to other Examples.

## Claims

1. A method for producing a cured product, comprising:

   (I) heating a thermosetting composition containing a styrene-butadiene-styrene block copolymer (SBS) (A) and a thermal radical generator (B) within a temperature range of 120°C to 175°C until 30% or more of double bonds derived from 1,2-bond structure in a butadiene block react; and
   (II) then heating the thermosetting composition within a temperature range of 181°C to 300°C until 50% or more of the double bonds derived from 1,2-bond structure in a butadiene block react,

   wherein the reaction rate of double bonds is calculated by using an infrared spectrometer.

2. The method for producing a cured product according to claim 1, wherein a molar ratio of 1,2-bond structure and 1,4-bond structure in the butadiene block in the styrene-butadiene-styrene block copolymer (SBS) (A) is 80:20 to 100:0, wherein the molar ratio of 1,2-bond structure and 1,4-bond structure is calculated by using an $^1$H-NMR.

3. The method for producing a cured product according to claim 1 or 2, wherein the thermosetting composition comprises 0.1 to 10 parts by weight of the thermal radical generator (B) with respect to 100 parts by weight of the styrene-butadiene-styrene block copolymer (SBS) (A).

4. The method for producing a cured product according to any one of claims 1 to 3, wherein a weight ratio of a styrene block and the butadiene block in the styrene-butadiene-styrene block copolymer (SBS) (A) is 10:90 to 90:10.

5. The method for producing a cured product according to any one of claims 1 to 4, wherein a number-average molecular weight (Mn) of the styrene-butadiene-styrene block copolymer (SBS) (A) is 2,000 to 100,000,
   wherein the number-average molecular weight (Mn) of the styrene-butadiene-styrene block copolymer (SBS) is measured by GPC in THF with polystyrene as a standard material.

6. The method for producing a cured product according to any one of claims 1 to 5, wherein a molecular weight distribution (Mw/Mn) of the styrene-butadiene-styrene block copolymer (SBS) (A) is 1.00 to 3.00.

## Patentansprüche

1. Verfahren zur Herstellung eines ausgehärteten Produkts, umfassend:

   (I) Erhitzen einer wärmehärtbaren Zusammensetzung, die ein Styrol-Butadien-Styrol-Blockcopolymer (SBS) (A)

und einen thermischen Radikalgenerator (B) enthält, in einem Temperaturbereich von 120 °C bis 175 °C, bis 30 % oder mehr der von der 1,2-Bindungsstruktur in einem Butadienblock abgeleiteten Doppelbindungen reagieren; und
(II) anschließendes Erhitzen der wärmehärtbaren Zusammensetzung in einem Temperaturbereich von 181 °C bis 300 °C, bis 50 % oder mehr der von der 1,2-Bindungsstruktur in einem Butadienblock abgeleiteten Doppelbindungen reagieren,

wobei die Reaktionsgeschwindigkeit der Doppelbindungen unter Verwendung eines Infrarotspektrometers berechnet wird.

**2.** Verfahren zur Herstellung eines ausgehärteten Produkts nach Anspruch 1, wobei das Molverhältnis der 1,2-Bindungsstruktur und 1,4-Bindungsstruktur im Butadienblock des Styrol-Butadien-Styrol-Blockcopolymers (SBS) (A) 80:20 bis 100:0 beträgt,
wobei das Molverhältnis der 1,2-Bindungsstruktur und 1,4-Bindungsstruktur unter Verwendung eines $^1$H-NMR berechnet wird.

**3.** Verfahren zur Herstellung eines ausgehärteten Produkts nach Anspruch 1 oder 2, wobei die wärmehärtbare Zusammensetzung 0,1 bis 10 Gewichtsteile des thermischen Radikalgenerators (B), bezogen auf 100 Gewichtsteile des Styrol-Butadien-Styrol-Blockcopolymers (SBS) (A), umfasst.

**4.** Verfahren zur Herstellung eines ausgehärteten Produkts nach einem der Ansprüche 1 bis 3, wobei ein Gewichtsverhältnis eines Styrolblocks und des Butadienblocks im Styrol-Butadien-Styrol-Blockcopolymer (SBS) (A) 10:90 bis 90:10 beträgt.

**5.** Verfahren zur Herstellung eines ausgehärteten Produkts nach einem der Ansprüche 1 bis 4, wobei ein zahlenmittleres Molekulargewicht (Mn) des Styrol-Butadien-Styrol-Blockcopolymers (SBS) (A) 2.000 bis 100.000 beträgt, wobei das zahlenmittlere Molekulargewicht (Mn) des Styrol-Butadien-Styrol-Blockcopolymers (SBS) mittels GPC in THF unter Verwendung von Polystyrol als Standardmaterial gemessen wird.

**6.** Verfahren zur Herstellung eines ausgehärteten Produkts nach einem der Ansprüche 1 bis 5, wobei eine Molekulargewichtsverteilung (Mw/Mn) des Styrol-Butadien-Styrol-Blockcopolymers (SBS) (A) 1,00 bis 3,00 beträgt.

## Revendications

**1.** Procédé de production d'un produit durci, comprenant :

(I) le chauffage d'une composition thermodurcissable contenant un copolymère séquencé styrène-butadiène-styrène (SBS) (A) et un générateur de radicaux thermiques (B) dans une plage de température de 120 °C à 175 °C jusqu'à ce que 30 % ou plus de doubles liaisons dérivées de la structure de liaison 1,2 dans un bloc butadiène réagissent ; et
(II) puis le chauffage de la composition thermodurcissable dans une plage de température de 181 °C à 300 °C jusqu'à ce que 50 % ou plus des doubles liaisons dérivées de la structure de liaison 1,2 dans un bloc butadiène réagissent,

dans lequel le taux de réaction des doubles liaisons est calculée en utilisant un spectromètre infrarouge.

**2.** Procédé de production d'un produit durci selon la revendication 1, dans lequel un rapport molaire de la structure de liaison 1,2 et de la structure de liaison 1,4 dans le bloc butadiène dans le copolymère séquencé styrène-butadiène-styrène (SBS) (A) est de 80:20 à 100:0,
dans lequel le rapport molaire de la structure de liaison 1,2 et de la structure de liaison 1,4 est calculé en utilisant une RMN $^1$H.

**3.** Procédé de production d'un produit durci selon la revendication 1 ou 2, dans lequel la composition thermodurcissable comprend 0,1 à 10 parties en poids du générateur de radicaux thermiques (B) par rapport à 100 parties en poids du copolymère séquencé styrène-butadiène-styrène (SBS) (A).

**4.** Procédé de production d'un produit durci selon l'une quelconque des revendications 1 à 3, dans lequel un rapport

pondéral d'un bloc styrène et du bloc butadiène dans le copolymère séquencé styrène-butadiène-styrène (SBS) (A) est de 10:90 à 90:10.

**5.** Procédé de production d'un produit durci selon l'une quelconque des revendications 1 à 4, dans lequel une masse moléculaire moyenne en nombre (Mn) du copolymère séquencé styrène-butadiène-styrène (SBS) (A) est de 2 000 à 100 000,
dans lequel la masse moléculaire moyenne en nombre (Mn) du copolymère séquencé styrène-butadiène-styrène (SBS) est mesurée par GPC dans du THF avec du polystyrène comme matériau étalon.

**6.** Procédé de production d'un produit durci selon l'une quelconque des revendications 1 à 5, dans lequel une distribution de masse moléculaire (Mw/Mn) du copolymère séquencé styrène-butadiène-styrène (SBS) (A) est de 1,00 à 3,00.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018095815 A
- WO 2018164833 A1
- JP H02120351 A
- JP H02283766 A
- JP H6192502 A
- JP 2000514122 W
- JP 2007302901 A